Europäisches Patentamt

European Patent Office

Office européen des brevets

(19)

(11) Veröffentlichungsnummer: **0 353 396**
**A1**

(12) **EUROPÄISCHE PATENTANMELDUNG**

(21) Anmeldenummer: **89107091.4**

(22) Anmeldetag: **20.04.89**

(51) Int. Cl.⁴: **F16C 29/06 , F16C 33/61**

(30) Priorität: **16.07.88 DE 3824193**

(43) Veröffentlichungstag der Anmeldung:
**07.02.90 Patentblatt 90/06**

(84) Benannte Vertragsstaaten:
**DE ES FR GB IT**

(71) Anmelder: **Jacob, Werner**
**Briandring 29**
**D-6000 Frankfurt/Main 70(DE)**

(72) Erfinder: **Jacob, Werner**
**Briandring 29**
**D-6000 Frankfurt/Main 70(DE)**

(74) Vertreter: **Harwardt, Günther, Dipl.-Ing.**
**HARWARDT NEUMANN PATENTANWÄLTE**
**Scheerengasse 2 Postfach 1455**
**D-5200 Siegburg 2(DE)**

(54) **Linearführung.**

(57) Die Erfindung betrifft eine Linearführung mit einer Leitschiene 1, an der entlang ein Schlitten 2 unter Zuhilfenahme von Umlaufschuhen 3 bewegbar ist. Die Umlaufschuhe 3 weisen Wälzkörper 4 auf. Die Wälzkörper 4 laufen einem auf separaten in die Leitschiene eingesetzten Laufprofil 8. Dem Umlaufschuh 3 sind Laufdrähte 12 zugeordnet, die als Abstützbasis für die Wälzkörper 4 dienen. Die Laufdrähte 12 sind nur im Bereich der Tragabschnitte 5 des Umlaufschuhes 3 angeordnet. In den übrigen Bereichen folgt ein lastfreier Umlauf , so daß an die Qualität der Führungsbahn nicht die Anforderungen zu stellen sind, wie im Bereich des Tragbahnabschnittes 5, da in den Umlenkbögen 7 und dem Rücklaufabschnitt 6 keine Lastaufnahme erfolgt. Durch diese Auslegung wird eine kostengünstige und einfach herzustellende Umlaufführung erreicht.

Fig.3

## Linearführung

Die Erfindung betrifft eine Linearführung mit einer Leitschiene und einem Schlitten, der entlang der Leitschiene über mindestens einen Umlaufschuh mit Wälzkörpern geführt ist, bei der der Umlaufschuh einen Tragabschnitt, über den die Wälzkörper mit der Leitschienenlauffläche in Kontakt sind, einen Rücklaufabschnitt und zwei beide endseitig verbindende Umlenkabschnitte aufweist, wobei die Wälzkörper im Rücklaufabschnitt und den beiden Umlenkabschnitten lastfrei geführt sind, und wobei der Umlaufschuh einen Grundkörper besitzt und die Leitschiene ein separates in die Grundschiene eingebettetes Laufprofil aufweist und dem Umlaufschuh zwei beabstandetete Wälzkörperreihen zugeordnet sind.

Eine solche Linearführung ist beispielsweise aus dem DE-GM 86 11 710.6 bekannt. Dabei laufen die als Kugeln ausgebildeten Wälzkörper unmittelbar auf der im Querschnitt kreisrunden Oberfläche des Laufprofils. Hierdurch ist zwischen dem Laufprofil und den Kugeln nur ein Punktkontakt gegeben.

Ferner sind auch Geradführungen mit Drahtkugellagern bekannt. Es handelt sich jedoch dabei um eine Führung, bei der die Kugeln den Bereich der sich gegeneinander abstützenden Bauteile nicht verlassen, also keine Umlauf führung bilden. Die Kugeln sind zwischen vier Drähten geführt. Die Laufbahnen an den Drähten werden durch Verformung und Glättung bei Bewegung unter Vorspannung erzielt (Aufsatz "20 Jahre Drahtkugellager (nach Franke)", Konstruktion 6. Jahrgang 1954 Heft 1, Seiten 27 - 30, Abbildung 15).

Die vorerwähnten Führungen sind entweder nur für geringe Auflasten oder kurze Bewegungen geeignet.

Der Erfindung liegt daher die Aufgabe zugrunde, eine einfach herstellbare und kostengünstige Linearführung vorzuschlagen, die auch für große Schiebebewegungen eingesetzt werden kann.

Diese Aufgabe wird erfindungsgemäß dadurch gelöst, daß das Laufprofil im Querschnitt gesehen zwei im Winkelabstand angeordnete Leitlaufbahnen aufweist und im Grundkörper des Umlaufschuhes für jede Wälzkörperreihe ein sich nur über den jeweiligen Tragabschnitt erstreckender Laufdraht mit jeweils einer Traglaufbahn in einer Ausnehmung eingebettet ist.

Von Vorteil bei dieser Ausbildung ist, daß für zwei Wälzkörperreihen insgesamt nur drei Laufdrähte erforderlich sind. Ferner sind die Laufdrähte im Umlaufschuh auf den Tragabschnitt beschränkt. Die übrigen Führungsbereiche dienen nur der Ungefährführung und sind nicht an der Lastübertragung beteiligt. Daher kann der Grundkörper auch aus einem billigen Material, beispielsweise als Aluminium-Druckgußteil, hergestellt werden.

In weiterer Ausgestaltung wird vorgeschlagen, daß die Wälzkörper als Kugeln und die Radien der Leitlaufbahnen und der Traglaufbahnen im Querschnitt unterschiedlich, aber größer als der Kugelradius ausgebildet sind.

Durch die gewählte Form der Leitlaufbahnen und Traglaufbahnen wird eine Linienberührung bzw. eine verringerte Hertz'sche Pressung erreicht. Es können also höhere Auflasten übernommen werden. Je nach Anwendungsfall wird festgelegt welche Laufbahn einen größeren Radius aufweisen soll.

Bevorzugt ist vorgesehen, daß der Radius der Traglaufbahnen und Leitlaufbahnen zwischen 1 % und 10 % größer ist als der Kugelradius.

Um eine lange Lebensdauer bei guter Laufqualität zu erreichen, ist vorgesehen, daß das die Leitlaufbahnen aufweisende Laufprofil und/oder die Laufdrähte aus gehärtetem Stahl bestehen.

In weiterer Ausgestaltung wird vorgeschlagen, daß das Laufprofil und/oder die Laufdrähte vor der Fixierung in der Grundschiene bzw. dem Grundkörper auf Endmaß hergestellt worden sind. Es kann also hier in einfacher Weise eine Vorfertigung erfolgen; die nötigen Toleranzen werden über die Einbettung erreicht.

Die Einbettung der Laufdrähte in den Ausnehmungen des Grundkörpers erfolgt vorzugsweise mittels eines Werkzeuges durch Eindrücken oder durch gerichtetes Einrollen.

Schließlich wird nach der Erfindung die Führung der Wälzkörper, im Tragabschnitt, durch die Traglaufbahn und an diese seitlich angeschlossene Halteabschnitte und ein Kugelleitblech gewährleistet.

Zwei bevorzugte Ausführungsbeispiele sind in der Zeichnung schematisch dargestellt.

Es zeigt

Fig. 1 eine Ansicht einer Linearführung mit Leitschiene und Umlaufschuh,

Fig. 2 eine teilweise geschnittene Ansicht eines einzelnen Umlaufschuhes mit Kugeln,

Fig. 3 einen Schnitt A-A gemäß Fig. 1 für einen Umlaufschuh mit Kugeln und

Fig. 4 einen Schnitt durch eine alternative Ausführung mit Zylinderrollen.

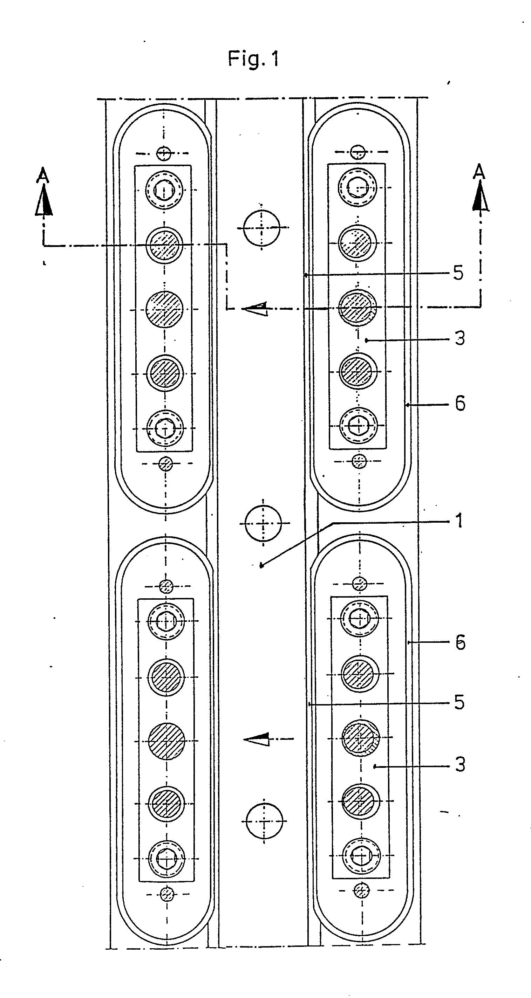

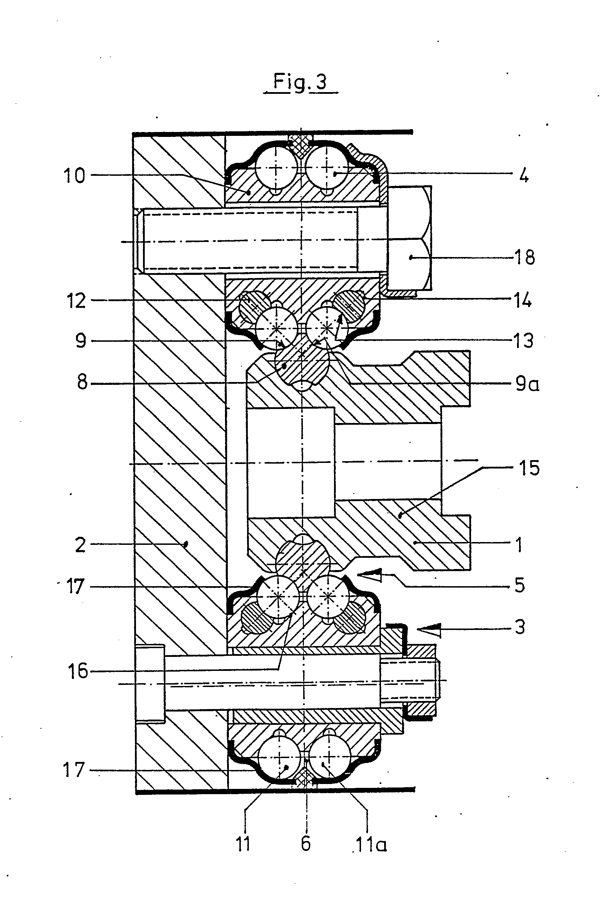

In Figur 1 und 3 ist eine Linearführung mit einer Leitschiene 1, einem Schlitten 2 und an dem Schlitten 2 befestigte und an der Leitschiene 1 geführte Umlaufschuhe 3 ersichtlich. Die Einzelheiten bezüglich der Ausbildung der Umlaufschuhe 3 ergibt sich insbesondere aus den Zeichnungsfiguren 2 bis 4.

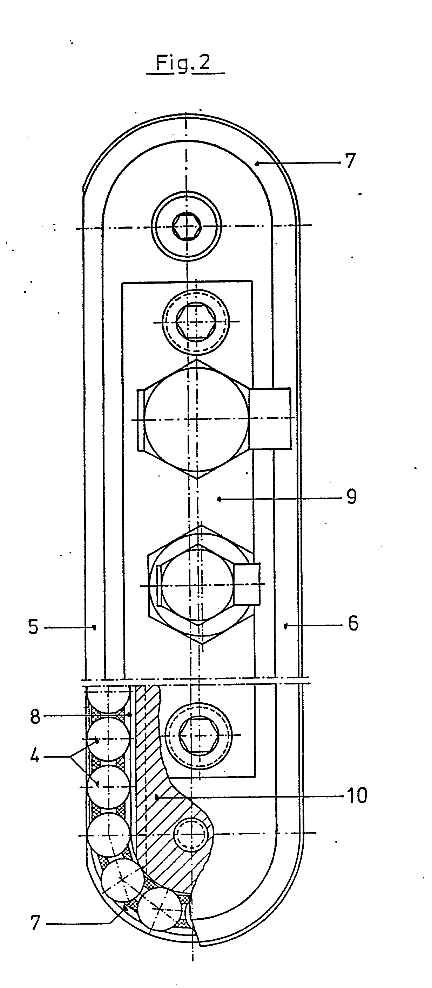

Der in Figur 2 dargestellte Umlaufschuh 3 besitzt einen Tragabschnitt 5, aus dem die als Kugeln ausgebildeten Wälzkörper 4 herausragen. Ferner weist der Umlaufschuh 3 einen Rücklaufabschnitt 6 und zwei den Tragabschnitt 5 mit dem Rücklaufabschnitt 6 verbindende Umlenkbogen 7 auf.

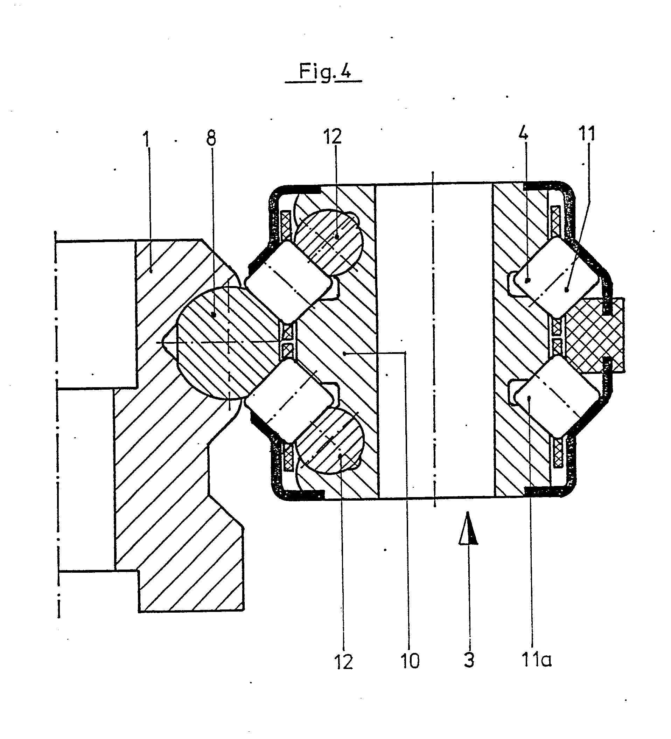

Aus den Figuren 3 und 4 ist ersichtlich, daß der Umlaufschuh 3 zwei Wälzkörperreihen 11, 11a umfaßt. Beim Ausführungsbeispiel nach Figur 3 sind die Wälzkörper 4 als Kugeln ausgebildet, während bei dem Ausführungsbeispiel nach Figur 4 die Wälzkörper 4 als Zylinderrollen ausgebildet sind. Die beiden Wälzkörperreihen 11, 11a sind parallel zueinander angeordnet. Im Tragabschnitt 5 sind die aus dem Umlaufschuh 3 hervorragenden Wälzkörper 4 in Anlage zum Laufprofil 8 der Leitschiene 1. Das Laufprofil 8 ist ein von der Grundschiene 15 separiertes Profil, das gehärtet ist und in einer Ausnehmung der Grundschiene 15 eingelassen ist. Das Laufprofil 8 weist zwei Leitlaufbahnen 9, 9a auf, welche im Querschnitt kreisbogenförmig ausgebildet sind, wobei der Kreisbogen dem Kugelradius des Wälzkörpers 4 entspricht. Der Grundkörper 10 des Umlaufschuhes 3 weist zwei in jeweils eine Ausnehmung 14 eingelassene Laufdrähte 12 auf, welche sich nur über den Tragabschnitt 5 erstrecken. Die Traglaufbahnen 13 sind entsprechend den Leitlaufbahnen 9, 9a im Winkel zueinander angeordnet. Die Laufdrähte 12 besitzen Traglaufbahnen 13, auf denen die Wälzkörper 4 abrollen. Für den Fall der Ausbildung als Kugeln sind die Traglaufbahnen 13 im Querschnitt kreisbogenförmig ausgestaltet und besitzen einen Radius, der geringfügig größer, ist als der Radius der Wälzkörper 4. Hierdurch wird eine Schmiegung und eine Reduzierung der Hertz'schen Pressung erreicht, die maßgebend ist für die Tragfähigkeit des Umlaufschuhes 3.

Seitlich schließt sich an die Traglaufbahn 13 zunächst eine Entlastungszone und dann ein Halteabschnitt 16 an, der ergänzt um ein die Kugeln 4 teilweise übergreifendes Kugelleitblech 17 für eine Halterung der Kugeln 4 im Tragabschnitt 5 sorgt, so daß diese als vormontierte Baueinheit Bestandteil des Umlaufschuhs 3 sind und nicht herausfallen können.

Bei der Ausführungsform nach Figur 4 sind die Wälzkörper 4 als Zylinderrollen ausgebildet. Entsprechend sind die Traglaufbahnen 13 und Leitlaufbahnen 9, 9a eben ausgebildet. Ansonsten besteht kein Unterschied zu der Ausführungsform nach den vorangehenden Figuren.

1 Leitschiene
2 Schlitten
3 Umlaufschuh
4 Wälzkörper
5 Tragabschnitt
6 Rücklaufabschnitt
7 Umlenkbogen
8 Laufprofil
9, 9a Leitlaufbahn
10 Grundkörper des Umlaufschuhs
11, 11a Wälzkörperreihe
12 Laufdraht
13 Traglaufbahn
14 Ausnehmung
15 Grundschiene
16 Halteabschnitt
17 Kugelleitblech
18 Befestigungsschrauben

## Ansprüche

1. Linearführung mit einer Leitschiene und einem Schlitten, der entlang der Leitschiene über mindestens einen Umlaufschuh mit Wälzkörpern geführt ist, bei der der Umlaufschuh einen Tragabschnitt, über den die Wälzkörper mit den Leitschienenlaufflächen in Kontakt sind, einen Rücklaufabschnitt und zwei beide endseitig verbindende Umlenkabschnitte aufweist, wobei die Wälzkörper im Rücklaufabschnitt und den beiden Umlenkabschnitten lastfrei geführt sind, und wobei der Umlaufschuh einen Grundkörper besitzt und die Leitschiene ein separates, in eine Grundschiene eingebettetes Laufprofil aufweist und dem Umlaufschuh zwei beabstandete Wälzkörperreihen zugeordnet sind, dadurch gekennzeichnet, daß das Laufprofil (8) im Querschnitt gesehen zwei im Winkelabstand angeordnete Leitlaufbahnen (9, 9a) aufweist und im Grundkörper (10) des Umlaufschuhes (3) für jede Wälzkörperreihe (11, 11a) ein sich nur über den jeweiligen Tragabschnitt (5) erstreckender Laufdraht (12) mit jeweils einer Traglaufbahn (13) in einer Ausnehmung (14) eingebettet ist.

2. Linearführung nach Anspruch 1, dadurch gekennzeichnet, daß die Wälzkörper (4) als Kugeln ausgebildet sind und die Radien der Leitlaufbahnen (9, 9a) und Traglaufbahnen (13) im Querschnitt unterschiedlich groß, aber größer als der Kugelradius ausgebildet sind.

3. Linearführung nach Anspruch 2, dadurch gekennzeichnet, daß der Radius der Traglaufbahnen (13) und Leitlaufbahnen (9, 9a) zwischen 1 % und 10 % größer ist als der Kugelradius.

4. Linearführung nach einem oder mehreren der Ansprüche 1 bis 3, dadurch gekennzeichnet, daß das die Leitlaufbahn (9, 9a) aufweisende Laufprofil (8) und/oder die Laufdrähte (12) aus gehärtetem Stahl bestehen.

5. Linearführung nach einem oder mehreren der Ansprüche 1 bis 4,
dadurch gekennzeichnet,
daß das Laufprofil (8) und/oder die Laufdrähte (12) vor der Fixierung in der Grundschiene (15) oder dem Grundkörper (15) auf Endmaß hergestellt worden sind.

6. Linearführung nach Anspruch 5,
dadurch gekennzeichnet,
daß die Laufdrähte (12) in die Ausnehmung (14) des Grundkörpers (10) mittels eines Werkzeuges eingedrückt oder gerichtet eingerollt sind.

7. Linearführung nach Anspruch 1,
dadurch gekennzeichnet,
daß die Wälzkörper (4) im Tragabschnitt (5) durch die Traglaufbahn (13) und an diese seitlich anschließende Halteabschnitte (16) sowie ein Kugelleitblech (17) geführt sind.

# Fig. 1

## Fig. 2

## Fig. 3

## Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-U-8 611 710 (ISERT ELEKTRONIK) * Seite 7, Zeile 28 - Seite 9, Zeile 16; Figuren 4,5,6 * | 1 | F 16 C 29/06 F 16 C 33/61 |
| A | | 2 | |
| D,Y | KONSTRUKTION, Band 6, Heft 1, 1954, Seiten 27-30, Berlin, Springer-Verlag, DE; F. VILLINGER: "20 Jahre Drahtkugellager (nach Franke)" * Seite 29; Figuren 15,16 * | 1 | |
| A | IDEM | 2 | |
| Y | EP-A-0 243 749 (HOESCH) * Seite 6, Zeile 23 - Seite 7, Zeile 14; Figuren 1,2 * | 1 | |
| A | | 2 | |
| A | US-A-4 557 530 (HAASE) * Spalte 6, Zeilen 43-52; Figuren 5,6 * | 1,4 | |
| A | US-A-3 934 946 (BURR) * Spalte 2, Zeilen 3-7 * | 2,3 | RECHERCHIERTE SACHGEBIETE (Int. Cl.5) |
| A | DE-C- 763 225 (ZEISS) * Anspruch 1; Figuren 5,7 * | 6 | F 16 C B 23 Q |
| A | DE-A-3 504 061 (WERNER) * Seite 9, Zeilen 8-21; Figuren 1,2 * | 6 | |
| A | FR-A-2 096 147 (S.K.F.) * Seite 5, Zeile 28 - Seite 6, Zeile 13; Figuren 4-8 * | 6 | |
| A | EP-A-0 173 805 (FRANKE) | 7 | |

Der vorliegende Recherchenbericht wurde für alle Patentansprüche erstellt

| Recherchenort | Abschlußdatum der Recherche | Prüfer |
|---|---|---|
| DEN HAAG | 20-10-1989 | BARON C. |